# EUROPEAN PATENT SPECIFICATION

(11) **EP 2 042 450 B1**
(45) Date of publication and mention of the grant of the patent: **02.11.2011**
(21) Application number: 08016707.5
(22) Date of filing: 23.09.2008
(51) Int. Cl.: B65G 39/04, B29C 63/04, B27D 5/00

(54) **Transport device in a profile coating machine**
Transportvorrichtung in einem Apparat zum Beschichten von Profilen
Dispositif de transport dans une machine de revêtement de profil

(30) Priority: 29.09.2007 DE 102007046794
(43) Date of publication of application: 01.04.2009
(73) Proprietor: Düspohl Maschinenbau GmbH, 33758 Schloss Holte-Stukenbrock (DE)
(72) Inventor: Wagner, Uwe, 33335 Gütersloh (DE)
(74) Representative: Wiebusch, Manfred

(56) References cited:
- WO-A-2005/077625
- DE-A1- 3 034 182
- DE-A1- 3 119 268
- GB-A- 1 174 872
- US-A- 3 031 895
- US-A- 3 782 515
- US-A- 5 282 532
- DATABASE WPI Week 200440 Thomson Scientific, London, GB; AN 2004-422997 XP002512092 & JP 2004 025599 A (MATSUSHITA ELECTRIC WORKS LTD) 29 January 2004 (2004-01-29)

## Description

The invention relates to a profile coating machine having an applicator system for applying a decor material onto the profile, and a plurality of sets of driven transport rollers. wherein each set comprises one or more transport rollers that are arranged on a common shaft and are lockable in different longitudinal positions of this shaft.

Such profile coating machines serve for coating profiles for windows, doors and the like with a decor material. The plurality of sets of transport rollers define a transport path on which the profile is fed past at least one applicator system for applying the decor material onto the profile.

It is important for a smooth function of the machine that the several sets of transport rollers assure a precisely straight transport of the profiles and that the profiles, which are subject to considerable lateral forces during application of the decor film, are supported on the transport rollers of each set so stably that a distortion of the profile is avoided. The number and the arrangement of the transport rollers of a set on the shaft depends upon the width and the cross-sectional shape of the profile. By changing the longitudinal positions of the transport rollers on the shaft, it is possible to adapt the machine to different types of profile.

In a coating machine of this type which has become known through prior use, each transport roller has a hub with a radial threaded bore for a set screw, so that the transport roller may securely be clamped on the shaft in arbitrary positions by means of the set screw. A suitable tool, e.g., a hexagonal key, is needed for fixing the transport roller by tightening the set screw. Moreover, a measuring tape or a ruler is needed in order for the longitudinal position of the transport roller on the shaft to be adjusted with high precision. preferably such that the transport rollers that correspond to one another in different sets are arranged in a common plane. In view of the typically relatively large total number of transport rollers, it is relatively cumbersome to reconfigure the conventional coating machine for a different profile.

US-A-5 282 532 shows a similar machine in which set screws are used for lockeng transport rollers on a shaft.

GB-A-1 174 872 discloses an arrangement of spring-biased locking members engaged in recesses of a roller for transmitting a torque from a driving member onto a roller that is mounted rotatably on a shaft.

It is therefore an object of the invention to provide a profile coating machine which may be reconfigured for different profile shapes in a simpler and yet precise way.

In order to achieve this object, according to the invention, the shaft is formed on its peripheral surface with a sequence of locking notches arranged in different longitudinal positions. and each transport roller has a spring-biased locking member and is locked on the shaft by engagement of this locking member in one of the locking notches.

Thus, each transport roller is held in position on the shaft solely by the fact that the spring-biased locking member is elastically biased into the corresponding locking notch with a sufficient force and the roller is thereby positively keyed on the shaft. The spring force is so large that a safe locking is assured also when the machine is running, even when the shaft and the transport rollers arranged thereon rotate with high speed.

Nevertheless, when the machine is reconfigured, the transport rollers may easily be re-adjusted in their longitudinal positions. To that end, it is only necessary to push the transport roller with sufficient force in longitudinal direction of the shaft, so that the locking member overcomes the spring force and leaves its former locking notch and is then successively caught in the subsequent notches until the desired position is reached. Since the locking notches are respectively arranged on the different shafts in well defined positions, it is assured that the transport rollers which correspond to one another and belong to different sets are precisely aligned with one another.

Advantageous embodiments of the invention are indicated in the dependent claims.

An embodiment example will now be explained in conjunction with the drawings, wherein:
- Fig. 1: is a schematic view of a profile coating machine;
- Fig. 2: is an axial cross-section of a set of several transport rollers that are ar- ranged on a commen shaft; and
- Fig. 3: shows a detail of Fig. 2.

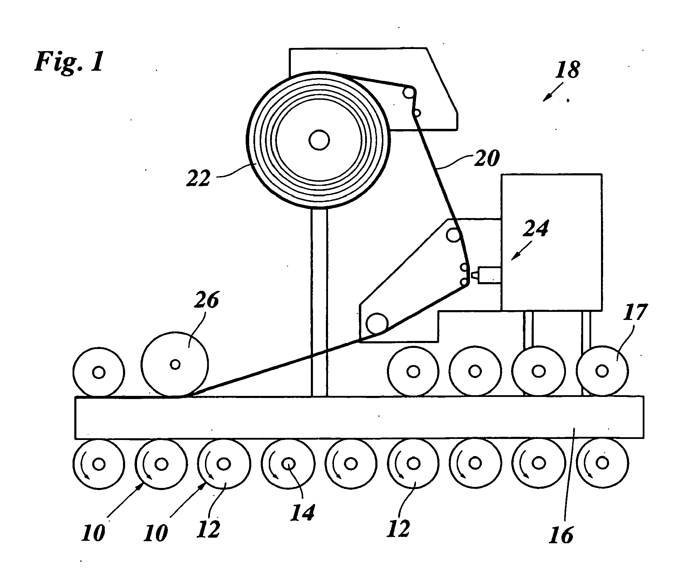

The profile coating machine shown in Fig. 1 has several sets 10 of transport rollers 12. Each set 10 comprises a plurality of transport rollers 12 which are arranged on a common shaft 14, although only one roller per set is visible in Fig. 1.

The peripheral surfaces of the transport rollers 12 define a transport path for a profile 16 to be coated.

By means of a drive system that has not been shown, the shafts 14 are driven such that the transport rollers 12 which are rigidly mounted on the shafts rotate in the directions indicated by arrows in Fig. 1 and thus feed the profile 16 towards the left side in Fig. 1. In the example shown, the sets 10 of the transport rollers 12 are arranged below the profile, whereas idling pressure rollers 17 are provided above the profile.

The transport rollers 12 that belong to different sets along the profile but correspond to one another in their positions are arranged in a common plane, so that no torques are exerted onto the cross-section of the profile and, consequently, a precisely straight transport of the profile is assured.

An applicator system 18 with which a web 20 of a decor material is applied to the continuously fed profile 16 is arranged at the transport path defined by the transport rollers 12. The applicator system 18 comprises for example a reel 22 from which the web 20 is drawn-off, an adhesive dispensing system 24 for applying adhesive to the web, and a pressure roller 26 with which the web is glued onto the profile 16 with exertion of pressure. In the simple example that has been shown here, the decor material 20 is only applied onto the top surface of the profile 16, but in practice the applicator system may be arranged such that the margins of the web are folded around the lateral edges of the profile 16 and the profile may possibly be coated on its entire peripheral surface.

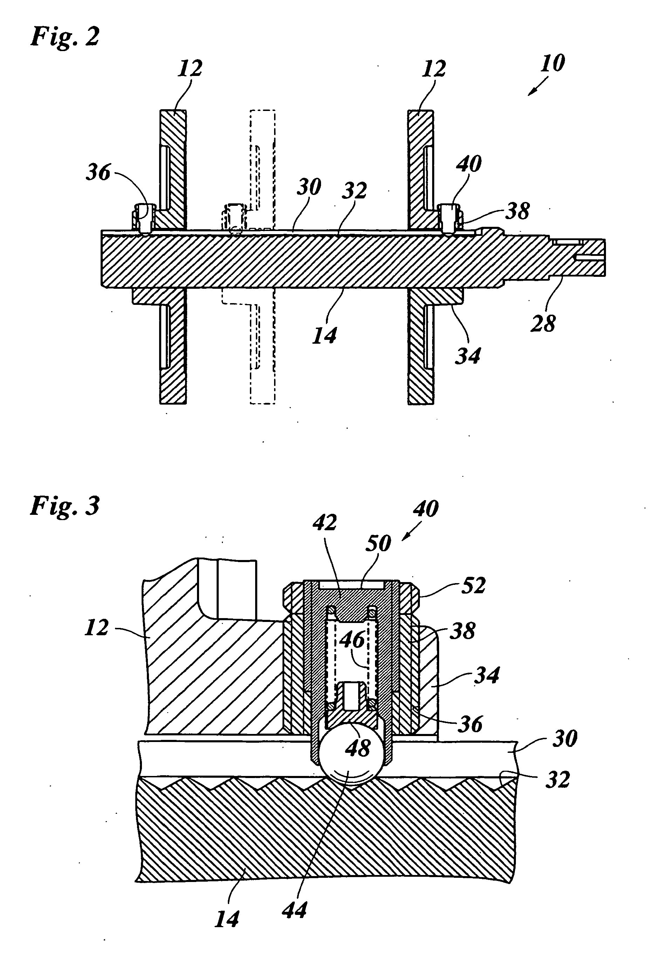

In Fig. 2, one of the sets of transport rollers 12 has been shown in an axial section. In this example, the sets includes only two transport rollers 12 which are arranged on the common shaft 14 in a mirror-image configuration. In practice, however, the number of transport rollers may be significantly larger. and additional transport rollers may be added as required, or the transport rollers may be shifted from a position in which they support the profile, if necessary, into a non-active position away from the profile. Thus, the transport rollers 12 are adjustable along the length of the shaft 14 individually and independently from one another, as has been indicated in phantom lines in Fig. 2.

One end of the shaft 14, on the right side in Fig. 2, has a bearing and drive section 28 with which it may be coupled to the drive system that has not been shown. For example, the shaft 14 is held with its bearing and drive section 28 in the drive system in cantilever fashion, so that the opposite (left) end projects freely and permits further transport rollers 12 to be thrust onto the shaft or withdrawn therefrom as required.

In one position of its peripheral surface, on the top side in Fig. 2, the shaft 14 has a longitudinally extending groove 30 the bottom of which forms a sequence of locking notches 32, e.g., conical notches, that are arranged in a relative fine raster. The shafts 14 of all sets 10 have an identical construction, so that their locking notches 32 are aligned with one another in transverse direction of the profile 16.

Each transport roller 12 has a hub 34 with a radial bore 36. The radial bore 36 accommodates a thread insert 38 with an internal thread, in which a pressure member 40 that has an external thread is screwed-in in grub-screw fashion.

As can be seen more clearly in Fig. 3, the pressure member 40 has a cylindrical casing 42 that is closed at its top end and on which the grub-screw external thread is formed in the top part whereas a non-threaded lower part projects to some extent into the groove 30 of the shaft 14. The open end of the casing 42, the lower end in Fig. 3, is caulked inwardly and forms a support for a non-detachable, yet axially movable ball that serves as a locking member 44.

A relatively strong spring 46 (helical compression spring) is accommodated in the casing 42 and is supported with its top end at the closed top end of the casing 42 whereas the lower end urges a spring seat 48 against the locking member 44, the spring seat being guided in the casing to be slidable in axial direction. Thus, the lower apex of the ball-shaped locking member 44 which projects downwardly from the casing is firmly urged into one of the conical locking notches 32, thereby providing a form-fit for holding the transport roller 12 in a defined axial position on the shaft 14.

The holding force exerted by the spring 46 is so large that the transport roller 12 is held in position while the machine is running, i.e., while the shaft 14 rotates. On the other hand, however, the transport roller 12 can be shifted in longitudinal direction of the shaft 14 when a user manually exerts a sufficiently large force onto the transport roller so that the locking member 44 will be pressed back into the casing against the force of the spring 46 until it is caught in the next locking notch 32. In this way, the axial position of the transport roller 12 may be adjusted on the shaft in well defined steps, e.g., in steps of 5 mm.

The engagement of the lower end of the casing 42 in the groove 30 permits to transmit a high torque from the shaft 14 onto the transport roller 12 and assures at the same time that, when the transport roller is mounted, it can be thrust onto the shaft only in an angular position in which the locking member faces the notches 32.

In the example shown, the casing 42 is formed in its top end face with a tool engagement portion 50. e.g., a screw driver slot or a hexagonal recess, so that it may be screwed into the thread insert 38 by means of a tool during initial assembly. When the desired depth of engagement in the groove 30 has been reached, the casing 42 is locked in this position with a locking nut 52. Then, when the position of the transport roller 12 on the shaft 14 is adjusted, the position of the casing 42 need not to be changed anymore.

When the outer periphery of the transport roller 12 is engaged by the profile 16 that moves along the transport path, and the profile exerts onto the transport roller 12 a force directed in axial direction of the shaft 14, then this force tends to tilt the transport roller 12 on the shaft. This results in a self-locking action between the hub 34 of the transport roller and the outer peripheral surface of the shaft 14, and this self-locking action assists the holding force of the locking member 44.

## Claims

1. A profile coating machine having an applicator system (18) for applying a decor material onto the profile, and plurality of sets (10) of driven transport rollers (12), wherein each set (10) comprises one or more transport rollers (12) that are arranged on a common shaft (14) and are lockable on this shaft in different longitudinal positions, **characterised in that** the shaft (14) has in its peripheral surface a sequence of locking notches (32) arranged in different longitudinal positions, and each transport roller (12) has a spring-biased locking member (44) and is locked on the shaft (14) by engagement of this locking member in one of the locking notches.

2. The profile coating machine according to claim 1 wherein the locking notches (32) are arranged with equal spacings on a line extending in axial direction of the shaft (14).

3. The profile coating machine according to claim 2, wherein the locking notches (32) are formed on the bottom of a groove (30) that is formed in the peripheral surface of the shaft (14).

4. The profile coating machine according to any of the preceding claims, wherein the locking notches (32) have a conical shape and are directly adjacent to one another in longitudinal direction of the shaft (14).

5. The profile coating machine according to any of the preceding claims, wherein the locking member (44) is held axially displaceably in a cylindrical casing (42) of a pressure member (40) that accommodates a spring (46) for biasing the locking member (44), and the locking member is biased by the spring (46) into a position in which its lower apex projects out of the casing (42).

6. The profile coating machine according to claim 5, wherein the casing (42) has an external thread and is threaded into a thread insert (38) or a radial bore (36) of a hub (34) of the transport roller (12).

7. The profile coating machine according to claim 6, wherein the casing (42) is locked in position relative to the hub (34) by a locking nut (52).

## Patentansprüche

1. Profilummantelungsmaschine einem Applikatorsystem (18) zum Aufbringen eines Dekormaterials auf das Profil, und mit mehreren Sätzen (10) von angetriebenen Transportrollen (12), bei der jeder Satz (10) eine oder mehrere Transportrollen (12) umfasst, die auf einer gemeinsamen Welle (14) angeordnet und in unterschiedlichen Längspositionen auf dieser Welle arretierbar sind, **dadurch gekennzeichnet**, das die Welle (14) auf ihrem Umfang eine Folge von in unterschiedlichen Längspositionen angeordneten Rastvertiefungen (32) aufweist und jede Transportrolle (12) ein federbelastetes Rastorgan (44) aufweist und durch Eingriff dieses Rastorgans in eine der Rastvertiefungen auf der Welle (14) arretiert ist.

2. Profilummantelungsmaschine nach Anspruch 1, bei der die Rastvertiefungen (32) in gleichmäßigen Abständen auf einer in Axialrichtung der Welle (14) verlaufenden Linie angeordnet sind.

3. Profilummantelungsmaschine nach Anspruch 2, bei der die Rastvertiefungen (32) am Grund einer in der Umfangsfläche der Welle (14) verlaufenden Nut (30) angeordnet sind.

4. Profilummantelungsmaschine nach einem der vorstehenden Ansprüche, bei der die Rastvertiefungen (32) konisch sind und in Längsrichtung der Welle (14) unmittelbar aneinander angrenzen.

5. Profilummantelungsmaschine nach einem der vorstehenden Ansprüche, bei der das Rastorgan (44) axial verschiebbar in einem zylindrischen Gehäuse (42) eines Druckstücks (40) gehalten ist, das eine Feder (46) zum Vorspannen des Rastorgans (44) aufnimmt, und das Rastorgan durch die Feder (46) in eine Position vorgespannt ist, in der es mit seinem unteren Scheitel aus dem Gehäuse (42) herausragt.

6. Profilummantelungsmaschine nach Anspruch 5, bei der das Gehäuse (42) mit einem Außengewinde in einen Gewindeeinsatz (38) oder eine Radialbohrung (36) einer Nabe (34) der Transportrolle (12) eingeschraubt ist.

7. Profilummantelungsmaschine nach Anspruch 6, bei der das Gehäuse (42) durch eine Kontermutter (52) in seiner Position in Bezug auf die Nabe (34) gehalten ist.

## Revendications

1. Machine de revêtement de profil ayant un système d'applicateur (18) servant à appliquer une matière formant un décor sur le profil, et une pluralité d'ensembles (10) de galets transporteurs commandés (12), dans lequel chaque ensemble (10) comprend un ou plusieurs galets transporteurs (12) qui sont montés sur un arbre commun (14) et sont verrouillables sur cet arbre dans différentes positions longitudinales, **caractérisée en ce que** l'arbre (14) a, dans sa surface périphérique, une série d'encoches de verrouillage (32) disposées dans différentes positions longitudinales, et chaque galet transporteur (12) a un élément de verrouillage (44) à ressort et est verrouillé sur l'arbre (14) par engagement de cet élément de verrouillage dans l'une des encoches de verrouillage.

2. Machine de revêtement de profil selon la revendication 1, dans laquelle les encoches de verrouillage (32) sont disposées à équidistance les unes des autres sur une ligne s'étendant dans la direction axiale de l'arbre (14).

3. Machine de revêtement de profil selon la revendication 2, dans laquelle les encoches de verrouillage (32) sont formées au fond d'une gorge (30) formée dans la surface périphérique de l'arbre (14).

4. Machine de revêtement de profil selon l'une quelconque des revendications précédentes, dans laquelle les encoches de verrouillage (32) ont une forme conique et sont directement adjacentes les unes aux autres dans la direction longitudinale de l'arbre (14).

5. Machine de revêtement de profil selon l'une quelconque des revendications précédentes, dans laquelle l'élément de verrouillage (44) est retenu, de manière à pouvoir se déplacer axialement, dans un boîtier cylindrique (42) d'un élément presseur (44) qui contient un ressort (46) destiné à solliciter l'élément de verrouillage (44), et l'élément de verrouillage est sollicité par le ressort (46) pour venir dans une position dans laquelle son sommet inférieur dépasse du boîtier (42).

6. Machine de revêtement de profil selon la revendication 5, dans laquelle le boîtier (42) a un filetage extérieur et est vissé dans un filetage rapporté (38) ou un alésage radial (36) d'un moyeu (34) du galet transporteur (12).

7. Machine de revêtement de profil selon la revendication 6, dans laquelle le boîtier (42) est immobilisé par rapport au moyeu (34) par un écrou de blocage (52).
